# EUROPÄISCHE PATENTSCHRIFT

(11) **EP 1 704 957 B1**
(45) Veröffentlichungstag und Bekanntmachung des Hinweises auf die Patenterteilung: **30.07.2008**
(21) Anmeldenummer: 05006466.6
(22) Anmeldetag: 24.03.2005
(51) Int. Cl.: B23Q 1/00, B23Q 3/18, B23Q 16/00

(54) **Kupplungsvorrichtung mit elastischen Bereichen zur X-Y-Ausrichtung**
Coupling device with elastic parts for X and Y orientation
Dispositif d'accouplement avec des parties élastiques pour une orientation en X et Y.

(43) Veröffentlichungstag der Anmeldung: 27.09.2006
(73) Patentinhaber: System 3R International AB, 162 50 Stockholm (SE)
(72) Erfinder: Dahlquist, Hakan, 16572 Hässelby (SE)
(74) Vertreter: Weiss, Wolfgang

(56) Entgegenhaltungen:
- EP-A- 0 255 042
- EP-A- 0 694 364
- EP-A- 0 849 034
- US-A- 5 791 803
- US-B1- 6 336 767

## Beschreibung

Die Erfindung betrifft eine Kupplungsvorrichtung mit einem ersten mit mindestens einem überstehenden Bereich versehenen Kupplungsteil und einem zweiten mit mindestens einem elastischen Bereich versehenen Kupplungsteil.

Aus der europäischen Patentanmeldung EP 0 255 042 ist eine Spannvorrichtung für ein Werkzeug an einer Werkzeugmaschine, insbesondere für eine Senkerodiermaschine bekannt. Beschrieben wird eine Spannvorrichtung für ein Werkzeug an einer Werkzeugmaschine, insbesondere einer Senkerodiermaschine, mit einem Spannfutter, welches zwei aus der Unterseite des Spannfutters vorstehende Leisten aufweist, die mit Anlageflächen zur Ausrichtung des Werkzeuges in einer x-Richtung und einer y-Richtung, die quer zur Mittellinie des Spannfutters weisen, versehen sind. Es ist vorgesehen, dass von der Unterseite des Spannfutters mehrere Pfosten vorstehen, welche an ihren freien Stirnflächen in der x-y-Ebene sich erstreckende Referenzflächen aufweisen, wobei die Leisten exzentrisch und winkelmässig zueinander ausgebildet sind, und dass ein Werkzeughalter zur Anlage an die Pfosten eine plane Oberfläche aufweist, in welche zwei Paare von auf Leisten ausgerichtete Nuten mit zur Anlage an die leisten vorgesehenen elastischen Lippen geschnitten sind, wobei der Werkzeughalter eine Mittelbohrung mit Arretierelementen zur arretierenden und lösbaren Aufnahme eines Zugbolzens besitzt.

Die EP 0 849 034 A1 beschreibt eine Kupplungsvorrichtung nach dem Oberbegriff von Anspruch 1 mit einem Kupplungsorgan und einem Kupplungsgegenstück. Die Kupplungsorgane weisen x-y-z-Referenzen auf, wobei an einem Kupplungsorgan lippenförmige elastische Einrichtungen vorgesehen sind, die mit entsprechenden Gegeneinrichtungen zusammenwirken.

Der vorliegenden Erfindung liegt die Aufgabe zugrunde, eine Kupplungsvorrichtung vorzuschlagen, die in einem Arbeitsgang automatisch und kostengünstig herstellbar ist. Ferner soll die Kupplungseinrichtung eine optimale Steifigkeit, Belastbarkeit, Kraftverteilung und eine geringe Bauhöhe aufweisen.

Diese Aufgabe wird erfindungsgemäss durch die Merkmale von Anspruch 1 gelöst.

Das zweite Kupplungsteil der erfindungsgemässen Kupplungsvorrichtung weist sich dadurch aus, dass es in einem Arbeitsgang herstellbar ist. Es kann in einem Schritt auf einer Drehbank oder Fräsmaschine gefertigt werden. Damit werden die Herstellkosten der erfindungsgemässen Kupplungsvorrichtung gegenüber den Herstellkosten der Kupplungsvorrichtungen des Standes der Technik erheblich reduziert. Das zweite Kupplungsteil ist vielseitig anwendbar, so dass nur einige Ausführungstypen notwendig sind. Die Lagerkosten werden somit reduziert. Die erfindungsgemässe Kupplungsvorrichtung erlaubt Anwendungen mit hohen Belastungen. Das Bruchrisiko ist minimalisiert. Die Kupplungsvorrichtung ist sowohl mit dezentralen als auch mit zentralen Referenzmerkmalen in einfacher Weise herstellbar als auch anwendbar.

Der innere Bereich des zweitens Kupplungsteiles kann kreisförmig oder rechteckig, vorzugsweise quadratisch sein.

Die erfindungsgemässe Kupplungsvorrichtung kann aus herkömmlichem Stahl gefertigt sein, wobei der Stahl durch einen thermischen Alterungsprozess gehärtet wird.

Weiterhin sind Kupplungsvorrichtungen aus Aluminium oder Kunststoff herstellbar.

Die erfindungsgemässe Kupplungsvorrichtung weist in bekannter Weise eine Befestigungsvorrichtung für die Befestigung des zweiten Kupplungsteiles an das erste Kupplungsteil auf. Alle im Stand der Technik bekannten Befestigungsvorrichtungen sind denkbar, wie z.B. ein Bajonettverschluss, Verschraubung mittels einer zentralen Verschraubung etc.

Im Übrigen kann die erfindungsgemässe Kupplungsvorrichtung umgekehrt aufgebaut sein, d.h. das erste Kupplungsteil weist die elastischen Bereiche auf, die mit den überstehenden Bereichen an dem zweiten Kupplungsteil zusammenwirken.

Die erfindungsgemässe Kupplungsvorrichtung ist im Zusammenhang mit Palletten verwendbar.

Die mit der Kupplungsvorrichtung verbundenen Vorteile werden insbesondere dadurch erzielt, dass die elastischen Bereiche des zweiten Kupplungsteiles innerhalb des Ringkörpers des zweiten Kupplungsteiles und nicht oberhalb wie beim Stand der Technik angeordnet sind.

Die Erfindung ist im folgenden in Ausführungsbeispielen dargestellt. Es zeigen
Fig. 1 eine dreidimensionale Darstellung des zweiten Kupplungsteiles
Fig. 2a und b das zweite Kupplungsteil in Drauf- und Schnittansicht A-A
Fig. 3 bis Fig. 5 verschiedene Ausführungsformen des ersten Kupplungsteiles
Fig. 12a, b und c eine Kupplungsvorrichtung mit geringer Bauhöhe
Fig. 13a und b ein zweites Kupplungsteil mit Balken und Konus
Fig. 14 bis Fig.15 Anwendungen der Kupplungsvorrichtung bei Palletten

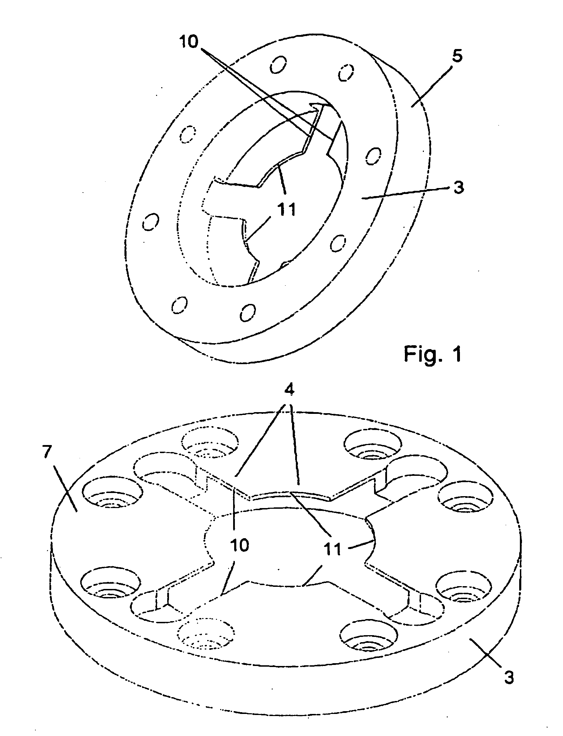

Eine dreidimensionale Ansicht des einstückig gefertigten zweiten Kupplungsteiles 3 offenbart die Figur 1 von oben und von unten gesehen. In diesem Ausführungsbeispiel ist das zweite Kupplungsteil 3 als Ring 5 gezeigt. Ebenso denkbar ist eine quadratische Ausführung. Das zweite Kupplungsteil weist elastische sektorförmige Bereiche 4 auf, die nach innen bezogen auf den ringförmigen Bereich 5 weisen. Der ringförmige Bereich 5 und die elastischen Bereiche 4 bilden eine Oberfläche 7 mit den elastischen seitlichen 10 und zirkularen 11 Randbereichen.

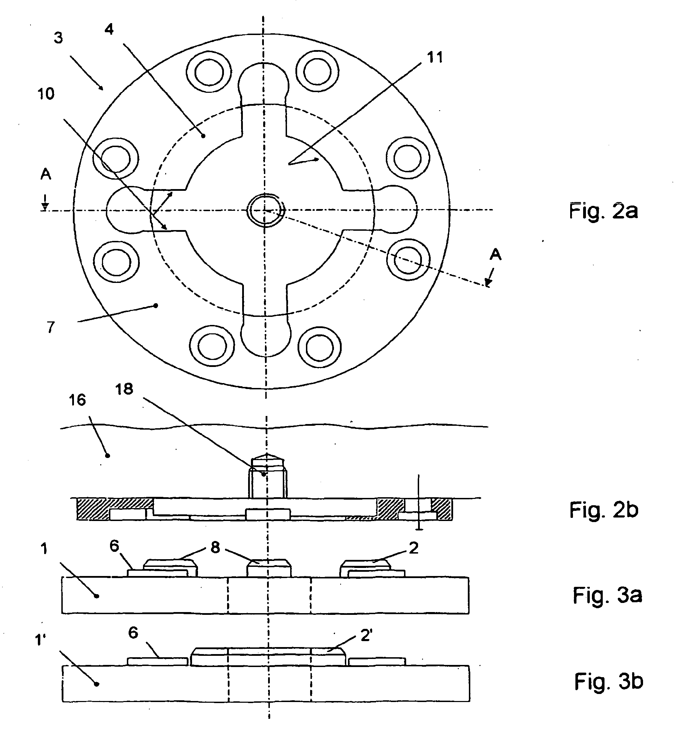

In den Figuren 2a und 2b ist das zweite Kupplungsteil 3 in Drauf- und Schnittansicht A-A gezeigt. Es weist elastische Bereiche 4. Die elastischen Bereiche 4 sind vier Segmente mit seitlichen 10 und zirkularen 11 Randbereichen.

In den Figuren 3a und 3b sind zwei Ausführungsformen des ersten Kupplungsteiles 1 und 1' im Schnitt dargestellt. Die Figur 3a weist als überstehende Bereiche 2 Balken auf, die Figur 3b als überstehenden Bereich 2' einen zentralen Konus.

Das erste Kupplungsteil 1 ist mit dem zweiten Kupplungsteil mittels einer nicht dargestellten Befestigungsvorrichtung beispielsweise mit dem Werkstück, Werkzeug etc. 16 verbindbar. Es sind alle bekannten Befestigungsvorrichtungen denkbar, beispielsweise mittels Bajonettverschluss, Verspannung mittels Kugeln etc. In der Figur 2b ist ein Gewindeloch 18 vorgesehen, in das eine nicht dargestellte Schraube zur Verspannung des zweiten Kupplungsteiles mit dem ersten Kupplungsteiles gedreht werden kann.

Die elastischen seitlichen Randbereiche 10 wirken im gespannten Zustand mit den überstehenden Balken 2 des ersten Kupplungsteiles 1 zur x-y-Ausrichtung zusammen. Der in dem ersten Kupplungsteil 1' vorgesehene zentrisch angeordnete Konus berührt in x-y- Ebene ausrichtend in gespannten Zustand die elastischen zirkularen Randbereichen 11.

Die z-Ausrichtung erfolgt über die Auflageflächen 6, welche im gespannten Zustand die Oberfläche 7 berühren.

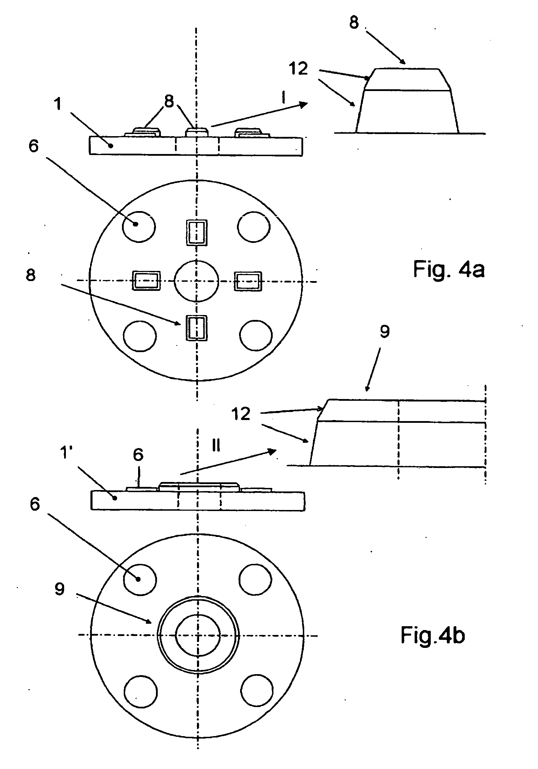

Das erste Kupplungsteil ist nochmals in Drauf- und Schnittansicht in zwei Ausführungsbeispielen 1 und 1' in den Figuren 4a und 4b gezeigt. Das erste Kupplungsteil 1 mit den Balken 8 ist in Figur 4a zu sehen. In Figur 4b ist ein erstes Kupplungsteil 1' mit einem zentralen Konus 9 gezeigt. Beide erste Kupplungsteile 1, 1' weisen Auflagen 6 für die z-Ausrichtung auf. In den vergrösserten Einzeldarstellungen I und II sind die Oberflächen der Balken 8 und des Konus' 9 mit zwei Schrägen mit verschiedenen Steigungswinkeln 12 zu sehen.

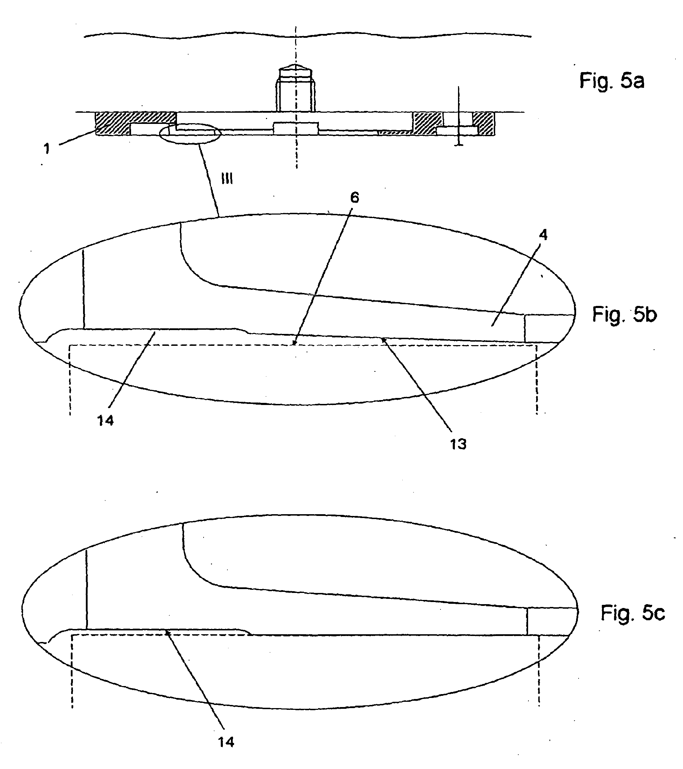

Eine andere Ausführung des ersten Kupplungsteiles 1 oder 1' zeigt den elastischen Bereich 4 mit einem Profil. Das Profil weist eine Neigung 13 und eine Vertiefung 14 auf, wie es in den Figuren 5b und c zu sehen ist. Die Figuren 5b und c stellen Vergrösserungen der Einzelheit III der Figur 5a dar, wobei die Figur 5b die Kupplungsvorrichtung im entspanntem und die Figur 5c im gespannten Zustand zeigt. Die punktierte Linie soll einen Balken 8 oder eine Auflagefläche 6 darstellen. Bevor die Kupplungsvorrichtung gespannt wird, berührt in einem ersten Schritt das geneigte Profil, das elastische Element 4 richtet das erste Kupplungsteil 1 aus und die Neigung 13 wird parallel zur Balkenoberfläche oder zur Anlagefläche ausgerichtet. Vorzugsweise ist in dem elastischen Bereich 4 eine Vertiefung 14 eingearbeitet. Die Vertiefung 14 ist über der Kontaktfläche angebracht. Der damit verbundene Vorteil bedeutet eine hohe Steifigkeit, bessere Belastung und höhere Bruchsicherheit. Bei höheren Belastungen geht der elastische Kontakt zwischen den elastischen Bereichen 4 und den Balkenoberflächen in einen festen Kontakt mit den Vertiefungen 14 über. Damit wird eine weitere Verbiegung der elastischen Bereiche verhindert. Ein Bruch wird dadurch verhindert.

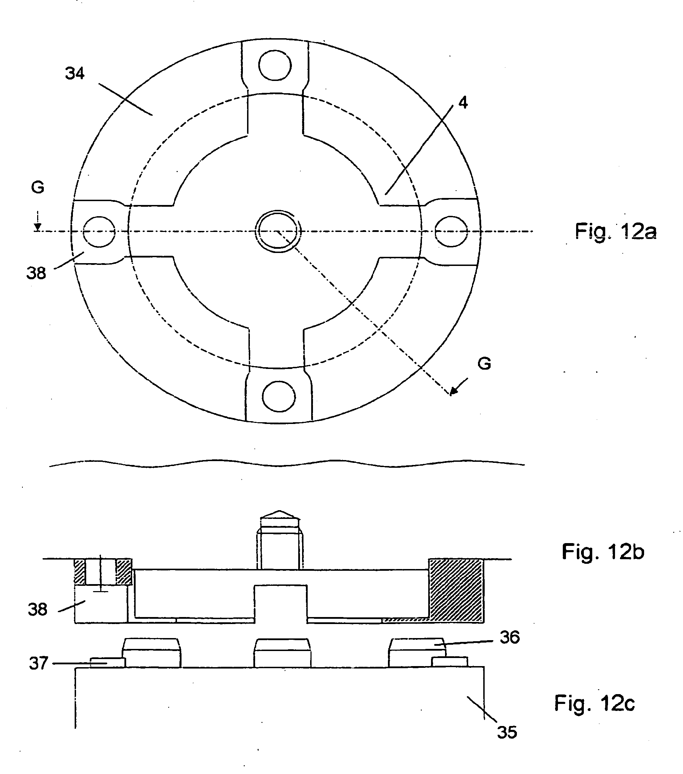

In den Figuren 12a bis 12 c ist eine Kupplungsvorrichtung mit geringeren Durchmessern gezeigt. Das zweite Kupplungsteil 34 in Figur 12a und Schnittzeichnung G-G in Figur 12b weist zwischen den elastischen Bereichen 4 Vertiefungen 38 auf. Die Vertiefungen 38 bieten Raum für die z-Auflagen 37 des ersten Kupplungsteiles 35 in Figur 12c.

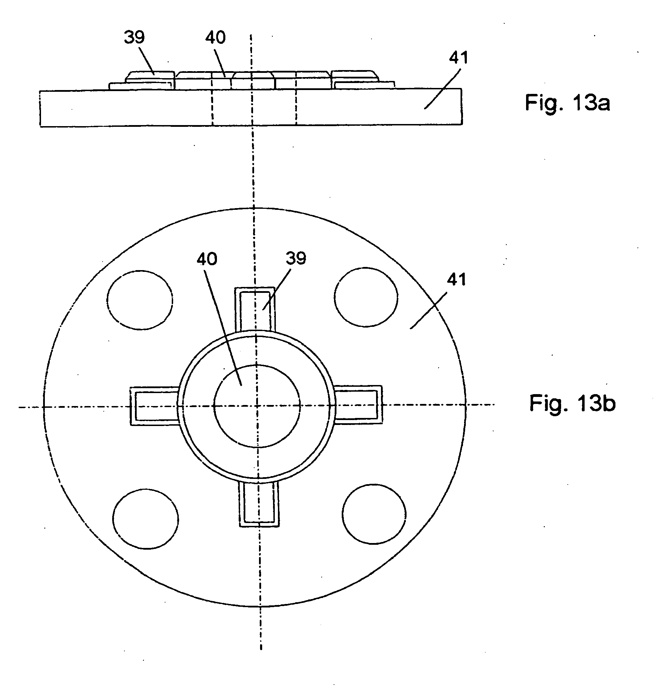

Eine Kombination von Balken 39 und zentralem Konus 40 ist in dem zweiten Kupplungsteil 41 in den Figuren 13a und 13 b gezeigt. Diese Kombination ist anwendbar bei Palletten mit Einzelhaltern oder Multihaltern. Dann kann in vorteilhafter Weise platzsparend die in den Figuren 13a und b gezeigte Kombination zum Einsatz kommen.

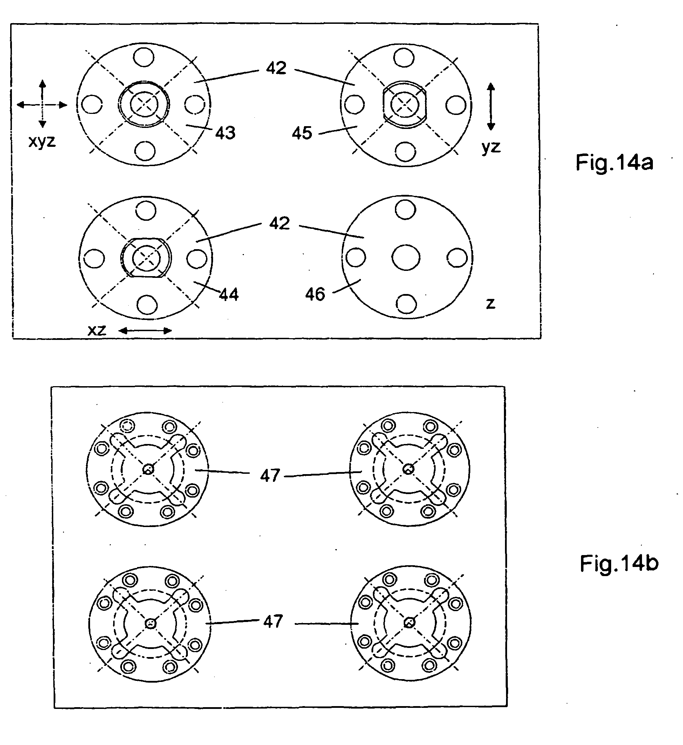

In der Figur 14a und b ist eine Anwendung für Palletten gezeigt. Es sind vier erste Kupplungsteile 42 zu sehen, wobei das erste Kupplungsteil 43 in Figur 14a für x-y-z , 44 für x-z, 45 für y-z und 46 für z Ausrichtung vorgesehen sind. Für alle Anwendungsfälle ist in Figur 14b das zweite Kupplungsteil 47 in einer einzigen Ausführungsform offenbart.

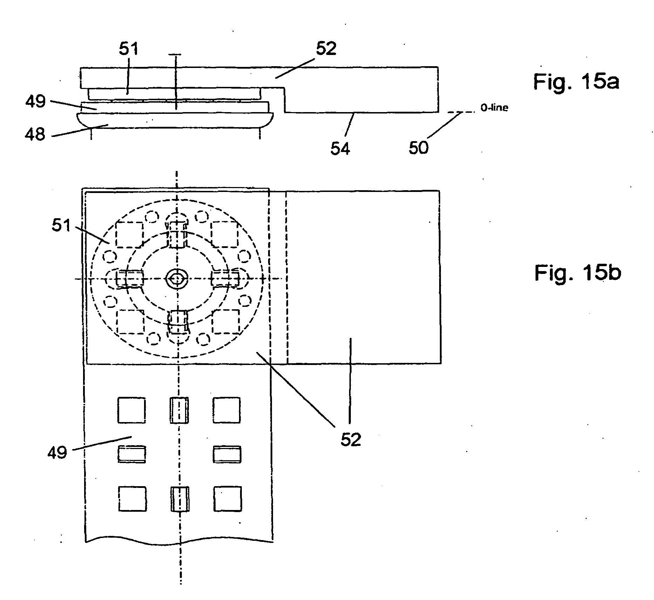

Eine weitere Anwendung der Kupplungsvorrichtung zeigt die Fig. 15a und b. Hier ist insbesondere die geringe Bauhöhe der Kupplungsvorrichtung hervorzuheben, die beispielsweise bei Drahterosionsmaschinen benötigt wird. Das erste Kupplungsteil 49 ist an der Basis 48 der Drahterosionsmaschine befestigt. Das zweite Kupplungsteil 51 ist mit dem Werkstück 52 verbunden, wobei die untere Fläche 54 des Werkstückes 52 mit der Basisfläche 54 der Drahterosionsmaschine auf dem Niveau der 0-Linie 50 liegt.

Selbstverständlich ist für alle vorgehend beschriebenen Ausführungen eine Umkehr des ersten Kupplungsteil und des zweiten Kupplungsteiles anwendbar, d.h. das erste Kupplungsteil weist elastische Bereiche und das zweite Kupplungsteil überstehende Bereiche auf.

### Bezugszeichenliste

- 1, 1': erstes Kupplungsteil
- 2, 2': überstehender Bereich
- 3: zweites Kupplungsteil
- 4: elastische Bereiche
- 5: Ring
- 6: Auflageflächen
- 7: Oberfläche
- 8: Balken
- 9: Konus
- 10: seitliche Randbereiche
- 11: zirkulare Randbereiche
- 12, 12': Winkel
- 13: Neigung
- 14: Vertiefung
- 16: Werkstück, Werkzeug
- 18: Gewindeloch
- 34: zweites Kupplungsteil
- 35: erstes Kupplungsteil
- 36: Balken
- 37: Z-Auflagen
- 38: Vertiefung
- 39: Balken
- 40: Zentraler Konus
- 41: zweites Kupplungsteil
- 42: erstes Kupplungsteil
- 43: erstes Kupplungsteil für x-y-z
- 44: erstes Kupplungsteil für x-z
- 45: erstes Kupplungsteil für y-z
- 46: erstes Kupplungsteil z
- 47: zweites Kupplungsteil
- 48: Basis
- 49: erstes Kupplungsteil
- 50: 0-Linie
- 51: zweites Kupplungsteil
- 52: Werkstück
- 54: Fläche der Basis

## Patentansprüche

1. Kupplungsvorrichtung mit einem ersten mit mindestens einem überstehenden Bereich (2, 2') versehenen Kupplungsteil (1, 1', 35, 42, 43, 44, 45, 46, 51) und einem zweiten mit mindestens einem elastischen Bereich (4) versehenen Kupplungsteil (3, 34, 41, 47, 49) , wobei die in z-Richtung überstehenden Bereiche (2, 2') des ersten Kupplungsteils (1, 1', 35, 42, 43, 44, 45, 46, 51) exzentrisch oder zentrisch angeordnet sind, und die überstehenden Bereiche (2, 2') konische mit mindestens einem Winkel (12, 12') zur z-Richtung ausgebildete Auflageflächen (6) aufweisen, wobei die zur x-y Ausrichtung in z-Richtung überstehenden Bereiche (2, 2') des ersten Kupplungsteils (1, 1', 35, 42, 43, 44, 45, 46, 51) in die elastischen Bereiche (4) des zweiten Kupplungsteiles (3, 34, 41, 47, 49) eingreifen, dass das zweite Kupplungsteil (3, 34, 41, 47, 49) einstückig ausgebildet ist und wobei mittels einer Befestigungseinrichtung (53) ein Werkstück (16) oder ein Werkzeug, das erste Kupplungsteil (1, 1', 35, 42, 43, 44, 45, 46, 51) und des zweite Kupplungsteil (3, 34, 41, 47, 49) verbindbar sind, **dadurch gekennzeichnet, dass** das zweite Kupplungsteil (3, 34, 41, 47, 49) ringförmig mit einer kreisförmigen oder quadratischen inneren Öffnung ausgebildet ist, dass die in Richtung Mittelpunkt weisenden elastischen Bereiche (4) des zweiten Kupplungsteiles (3, 34, 41, 47, 49) radius-parallel geformt sind und radial in die Öffnung weisen und dass die elastischen Bereiche (4) als kreisförmige freie Sektorabschnitte zungenförmig ausgebildet sind, und dass das erste Kupplungsteil (1, 1', 35, 42, 43, 44, 45, 46, 51)) einen konisch geformten vorstehenden, zentrisch angeordneten Bereich (9) aufweist und dass die elastischen Bereiche (4) des zweiten Kupplungsteils (3, 34, 41, 47, 49) mit dem zentrisch vorstehenden Bereich (9) des ersten Kupplungsteils (1, 1', 35, 42, 43, 44, 45, 46, 51)) zusammenwirken.

2. Kupplungsvorrichtung nach Anspruch 1, **dadurch gekennzeichnet, dass** das/die Kupplungsteil(e) aus einem gehärteten Stahl gefertigt ist/sind.

3. Kupplungsvorrichtung nach Anspruch 1, **dadurch gekennzeichnet, dass** das/die Kupplungsteil(e) aus Aluminium gefertigt ist/sind.

4. Kupplungsvorrichtung nach Anpruch 1, **dadurch gekennzeichnet, dass** das/die Kupplungsteil(e) aus Kunststoff gefertigt ist/sind.

5. Kupplungsvorrichtung nach einem der vorherigen Ansprüche, **dadurch gekennzeichnet, dass** die Befestigungsvorrichtung (53) für die Befestigung des zweiten Kupplungsteiles (3, 34, 41, 47, 49) an das erste Kupplungsteil (1, 1', 35, 42, 43, 44, 45, 46, 51)) als Bajonettverschluss ausgebildet ist.

6. Kupplungsvorrichtung nach einem der vorherigen Ansprüche, **dadurch gekennzeichnet, dass** die Kupplungsvorrichtung umgekehrt ausgebildet ist, wobei das erste Kupplungsteil (1, 1', 35, 42, 43, 44, 45, 46, 51) mindestens einen elastischen Bereich (4) und das zweite Kupplungsteil (3, 34, 41, 47, 49) mindestens einen vorstehenden Bereich (2, 2') aufweist.

7. Kupplungsvorrichtung nach einem der vorherigen Ansprüche, **dadurch gekennzeichnet, dass** sie in Palletten (52) verwendet wird.

## Claims

1. Coupling device having a first coupling part (1, 1', 35, 42, 43, 44, 45, 46, 51) provided with at least one projecting region (2, 2') and a second coupling part (3, 34, 41, 47, 49) provided with at least one elastic region (4), the regions (2, 2') of the first coupling part (1, 1', 35, 42, 43, 44, 45, 46, 51) which project in the z direction being arranged eccentrically or centrally, and the projecting regions (2, 2') having conical seating surfaces (6) formed with at least one angle (12, 12') relative to the z direction, the regions (2, 2'), projecting in the z direction for the x-y orientation, of the first coupling part (1, 1', 35, 42, 43, 44, 45, 46, 51) engaging in the elastic regions (4) of the second coupling part (3, 34, 41, 47, 49), the second coupling part (3, 34, 41, 47, 49) being of one-piece design, and a workpiece (16) or a tool, the first coupling part (1, 1', 35, 42, 43, 44, 45, 46, 51) and the second coupling part (3, 34, 41, 47, 49) being able to be connected by means of a fastening device (53), **characterized in that** the second coupling part (3, 34, 41, 47, 49) is of annular design with a circular or square inner opening, **in that** the elastic regions (4), pointing in the direction of the centre, of the second coupling part (3, 34, 41, 47, 49) are formed in a radially parallel manner, and point radially into the opening, and **in that** the elastic regions (4) are designed as circular free sector sections, and in a tongue shape, and **in that** the first coupling part (1, 1', 35, 42, 43, 44, 45, 46, 51) has a conically shaped, projecting, centrally arranged region (9), and **in that** the elastic regions (4) of the second coupling part (3, 34, 41, 47, 49) interact with the centrally projecting region (9) of the first coupling part (1, 1', 35, 42, 43, 44, 45, 46, 51).

2. Coupling device according to Claim 1, **characterized in that** the coupling part/parts is/are produced from a hardened steel.

3. Coupling device according to Claim 1, **characterized in that** the coupling part/parts is/are produced from aluminium.

4. Coupling device according to Claim 1, **characterized in that** the coupling part/parts is/are produced from plastic.

5. Coupling device according to one of the preceding claims, **characterized in that** the fastening device (53) for fastening the second coupling part (3, 34, 41, 47, 49) to the first coupling part (1, 1', 35, 42, 43, 44, 45, 46, 51) is designed as a bayonet fastener.

6. Coupling device according to one of the preceding claims, **characterized in that** the coupling device is designed the other way round, the first coupling part (1, 1', 35, 42, 43, 44, 45, 46, 51) having at least one elastic region (4) and the second coupling part (3, 34, 41, 47, 49) having at least one projecting region (2, 2').

7. Coupling device according to one of the preceding claims, **characterized in that** it is used in pallets (52).

## Revendications

1. Dispositif d'accouplement comprenant une première partie d'accouplement (1, 1', 35, 42, 43, 44, 45, 46, 51) pourvue d'au moins une région saillante (2, 2') et une deuxième partie d'accouplement (3, 34, 41, 47, 49) pourvue d'au moins une région élastique (4), les régions saillantes (2, 2') dans la direction z de la première partie d'accouplement (1, 1', 35, 42, 43, 44, 45, 46, 51) étant disposées de manière excentrée ou centrale, et les régions saillantes (2, 2') présentant des surfaces d'appui coniques (6) réalisées avec au moins un angle (12, 12') par rapport à la direction z, les régions saillantes (2, 2') de la première partie d'accouplement (1, 1', 35, 42, 43, 44, 45, 46, 51) dans la direction z, par rapport à l'orientation x-y, venant en prise dans les régions élastiques (4) de la deuxième partie d'accouplement (3, 34, 41, 47, 49), la deuxième partie d'accouplement (3, 34, 41, 47, 49) étant est réalisée d'une seule pièce et un dispositif de fixation (53) permettant de connecter une pièce (16) ou un outil, la première partie d'accouplement (1, 1', 35, 42, 43, 44, 45, 46, 51) et la deuxième partie d'accouplement (3, 34, 41, 47, 49), **caractérisé en ce que** la deuxième partie d'accouplement (3, 34, 41, 47, 49) est réalisée sous forme annulaire avec une ouverture interne circulaire ou carrée, **en ce que** les régions élastiques (4) de la deuxième partie d'accouplement (3, 34, 41, 47, 49), tournées dans la direction du centre, étant formées avec des rayons parallèles et étant orientées radialement dans l'ouverture et **en ce que** les régions élastiques (4) sont réalisées en forme de langues sous forme de portions de secteurs circulaires libres, et **en ce que** la première partie d'accouplement (1, 1', 35, 42, 43, 44, 45, 46, 51) présente une région (9) de forme conique, saillante, disposée centralement, et **en ce que** les régions élastiques (4) de la deuxième partie d'accouplement (3, 34, 41, 47, 49) coopèrent avec la région (9) saillant centralement de la première partie d'accouplement (1, 1', 35, 42, 43, 44, 45, 46, 51).

2. Dispositif d'accouplement selon la revendication 1, **caractérisé en ce que** la ou les parties d'accouplement sont fabriquées en un acier durci.

3. Dispositif d'accouplement selon la revendication 1, **caractérisé en ce que** la ou les parties d'accouplement sont fabriquées en aluminium.

4. Dispositif d'accouplement selon la revendication 1, **caractérisé en ce que** la ou les parties d'accouplement sont fabriquées en plastique.

5. Dispositif d'accouplement selon l'une quelconque des revendications précédentes, **caractérisé en ce que** le dispositif de fixation (53) pour la fixation de la deuxième pièce d'accouplement (3, 34, 41, 47, 49) est réalisé sur la première partie d'accouplement (1, 1', 35, 42, 43, 44, 45, 46, 51) sous forme de fermeture à baïonnette.

6. Dispositif d'accouplement selon l'une quelconque des revendications précédentes, **caractérisé en ce que** le dispositif d'accouplement est réalisé de manière inverse, la première partie d'accouplement (1, 1', 35, 42, 43, 44, 45, 46, 51) présentant au moins une région élastique (4) et la deuxième partie d'accouplement (3, 34, 41, 47, 49) présentant au moins une région saillante (2, 2').

7. Dispositif d'accouplement selon l'une quelconque des revendications précédentes, **caractérisé en ce qu'**il est utilisé dans des palettes (52).
